# EUROPEAN PATENT APPLICATION

(11) **EP 3 382 873 A2**
(43) Date of publication of application: **03.10.2018**
(21) Application number: 18164389.1
(22) Date of filing: 27.03.2018
(51) Int. Cl.: H02M 3/155, H02M 1/42, H02M 1/44

(54) **CONVERTER DEVICE, CONTROL METHOD FOR SAME, AND MOTOR DRIVING APPARATUS**

(30) Priority: 31.03.2017 JP 2017070982
(71) Applicant: MITSUBISHI HEAVY INDUSTRIES THERMAL SYSTEMS, LTD., Tokyo 108-8215 (JP)
(72) Inventor: Takada, Junichi, Tokyo, 108-8215 (JP); Shimizu, Kenji, Tokyo, 108-8215 (JP); Watanabe, Takamasa, Tokyo, 108-8215 (JP); Sato, Takeshi, Tokyo, 108-8215 (JP)
(74) Representative: Henkel, Breuer & Partner

(57) **Abstract**

Loss and noise in a reactor are reduced while upsizing of the reactor is avoided. A converter device includes a rectification unit that performs full-wave rectification on an input voltage from an AC power source, a switching element connected between output terminals of the rectification unit, a capacitor connected in parallel with the switching element, a reactor provided in an electric power line between the rectification unit and the switching element, and a converter control unit that controls on/off of the switching element. The converter control unit provides, in on/off control of the switching element, a switching suspension time period during which an on state of the switching element is continuously maintained.

## Description

### [Technical Field]

The present invention relates to a converter device, a control method for the same, and a motor driving apparatus.

### [Background Art]

A household air conditioner, etc., has installed therein a motor driving apparatus for driving a motor for a compressor to be installed. The motor driving apparatus is provided with a converter device that converts a two-phase AC voltage inputted from a commercial power source, for example, to a DC voltage, and with an inverter device that converts the DC voltage outputted from the converter device to a three-phase AC voltage and supplies the three-phase AC voltage to the compressor motor.

As one technique for achieving high efficiency in such a converter device of a motor driving apparatus, a technique of controlling a DC voltage to be supplied to an inverter device by performing PAM (pulse amplitude modulation) control of a switching element has been used (for example, see PTL 1 and 2) .

### [Citation List]

### [Patent Literature]

[PTL 1] Japanese Unexamined Patent Application, Publication No. 2001-178139
[PTL 2] the Publication of Japanese Patent No. 4092087

### [Summary of Invention]

### [Technical Problem]

In a case where the PAM control is performed, there is a problem of distortion of the waveform of a current flowing through a reactor dependent on a switching operation, namely, a problem of an increase in noise of the reactor and an increase in power loss (iron loss) generated in the reactor due to an included high-frequency component.

Since the reactor is formed of an iron core material and a winding (e.g., a copper wire), the weight of the reactor is larger than each weight of other electronic components. Thus, downsizing and weight reduction of the reactor have been strongly demanded. To downsize the reactor, the size of the iron core needs to be reduced, so that an increase in a current density, that is, an increase in copper loss becomes a problem.

On the contrary, the loss can be reduced by upsizing of the iron core. However, this is not preferable because the weight becomes large.

Accordingly, downsizing of the converter device and reduction of the loss are in a tradeoff relationship, and are difficult to satisfy simultaneously.

In addition, as described above, a converter device in which PAM control is performed has a problem of noise due to harmonics caused by switching. For example, in order to reduce noise, a method for setting a switching frequency to the outside of an audible region (e.g., a frequency higher than 20 kHz) has conventionally been proposed. By this method, the size of a reactor can be reduced but distortion of a waveform inputted to an inverter device becomes great because the frequency is high. Therefore, a high performance filter needs to be provided to satisfy, for example, the regulation of harmonics determined by the International Electrotechnical Commission (IEC), so that an increase in cost cannot be avoided.

The present invention has been made in view of the above circumstances, and an object thereof is to provide a converter device, a control method for the same, and a motor driving apparatus, which can achieve reduction of loss and reduction of noise in a reactor while avoiding upsizing of the reactor.

### [Solution to Problem]

In order to solve the above problems, the present invention adopts the following solutions.

A first aspect of the present invention is a converter device including: a rectification unit that performs full-wave rectification on an input voltage from an AC power source; a switching element connected between output terminals of the rectification unit; a capacitor connected in parallel with the switching element; a reactor provided in an electric power line between the rectification unit and the switching element; and a converter control unit that controls on/off of the switching element, wherein the converter control unit provides, in on/off control of the switching element, a switching suspension time period during which an on state of the switching element is continuously maintained.

According to the above configuration, the switching suspension time period during which an on state of the switching element is continuously maintained is provided in the on/off control of the switching element, and thus, a time period during which no harmonics occur in a current flowing through the reactor can be provided. Accordingly, reactor loss and reactor noise can be easily reduced without upsizing of the reactor.

The converter device may include a voltage detection unit that detects an input voltage inputted to the rectification unit, and the converter control unit may include a modulated signal generation unit that generates a modulated signal by increasing, at a prescribed modulation rate, an amplitude of the input voltage detected by the voltage detection unit, a carrier wave generation unit that generates a carrier wave having a prescribed frequency by using the input voltage detected by the voltage detection unit, and a waveform comparison unit that generates a control signal for the switching element by comparing the modulated signal generated by the modulated signal generation unit with the carrier wave generated by the carrier wave generation unit.

By this increase of the amplitude of the input voltage at the prescribed modulation rate, the switching suspension time period can be easily provided.

In the above converter device, the modulation rate is set within a certain range that allows harmonics included in a reactor current flowing through the reactor to satisfy a prescribed regulation of harmonics.

The modulation rate is set within a range of 110 to 120%, for example.

By setting of the modulation rate within the above range, harmonics can be preferably reduced.

In the above converter device, the frequency of the carrier wave may be set within an audible region.

By setting of the frequency of the carrier wave to the above range, necessity of a high performance filter, etc. for reducing harmonics can be eliminated.

A second aspect of the present invention is a motor driving apparatus including any one of the converter devices described above, and an inverter device that converts a DC voltage outputted from the converter device to an AC voltage.

A third aspect of the present invention is a control method for a converter device including a rectification unit that performs full-wave rectification on an output from an AC power source, a switching element connected in parallel between output terminals of the rectification unit, a capacitor connected in parallel with the switching element, and a reactor provided in an electric power line between the rectification unit and the switching element, the method comprising providing, in on/off control of the switching element, a switching suspension time period during which an on state of the switching element is continuously maintained.

### [Advantageous Effects of Invention]

According to the present invention, an effect of being able to achieve reduction of loss and reduction of noise in a reactor while avoiding upsizing of the reactor, can be provided.

### [Brief Description of Drawings]

[Fig. 1] Fig. 1 is a diagram illustrating the schematic configuration of a motor driving apparatus according to one embodiment of the present invention.
[Fig. 2] Fig. 2 is a diagram illustrating the schematic configuration of a converter control unit according to the one embodiment of the present invention.
[Fig. 3] Fig. 3 is a diagram showing one example of waveforms of a modulated signal Vsin, a carrier wave Vs, and a PAM control signal Vpam according to the one embodiment of the present invention.
[Fig. 4] Fig. 4 is a diagram showing one example of the waveforms of the modulated signal Vsin, the carrier wave Vs, and the PAM control signal Vpam when the modulation rate at a modulated wave generation unit is set to 100%, namely, when a switching suspension time period is not provided in the converter device according to the one embodiment of the present invention.
[Fig. 5] Fig. 5 is a diagram showing the voltage waveform of a reactor voltage when the modulation rate at the modulated wave generation unit is set to 115% in the converter device according to the one embodiment of the present invention.
[Fig. 6] Fig. 6 is a diagram showing the current waveform of a reactor current when the modulation rate at the modulated wave generation unit is set to 115% in the converter device according to the one embodiment of the present invention.
[Fig. 7] Fig. 7 is a diagram showing the voltage waveform of a reactor voltage when the amplitude modulation rate at the modulated wave generation unit is set to 100% in a configuration similar to the configuration of the converter device according to the one embodiment of the present invention.
[Fig. 8] Fig. 8 is a diagram showing the current waveform of a reactor current when the amplitude modulation rate at the modulated wave generation unit is set to 100% in the configuration similar to the configuration of the converter device according to the one embodiment of the present invention.
[Fig. 9] Fig. 9 shows the results of experiments in which the modulation rate at the modulated wave generation unit was set to 100%, 110%, 115%, and 120% in the converter device according to the one embodiment of the present invention, wherein reactor noise, reactor loss, and the minimum value of a harmonic margin with respect to the regulation of harmonics determined by the IEC obtained at the respective modulation rates are shown so as to be compared with one another.
[Fig. 10] Fig. 10 is a diagram showing an input current, a driving signal for a switching element, and the waveform of a motor current when the modulation rate was set to 120% in the experiment shown in Fig. 9.
[Fig. 11] Fig. 11 is a diagram showing an input current, a driving signal for the switching element, and the waveform of a motor current when the modulation rate was set to 100% in the experiment shown in Fig. 9.

### [Description of Embodiments]

Hereinafter, one embodiment of a converter device, a control method for the same, and a motor driving apparatus according to the present invention is described with reference to the drawings. In the following description, the motor driving apparatus is exemplified by use of a case where the motor driving apparatus is applied to a household air conditioner, for example. However, the converter device, the control method for the same, and the motor driving apparatus according to the present invention are widely applicable to any other equipment for general use.

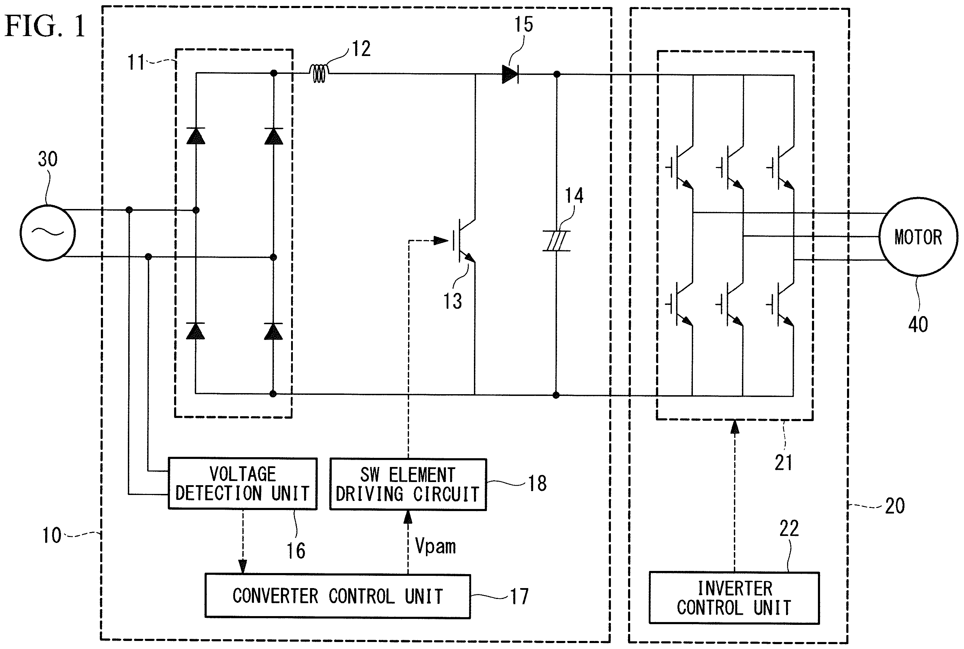

Fig. 1 is a diagram illustrating the schematic configuration of a motor driving apparatus according to the present embodiment. As illustrated in Fig. 1, the motor driving apparatus according to the present embodiment includes, as main components, a converter device 10 and an inverter device 20.

The converter device 10 incudes, as main components, a rectification unit 11, a reactor 12, a switching element 13, a capacitor 14, and a converter control unit 17.

The rectification unit 11 performs full-wave rectification on an input voltage which is a two-phase AC voltage outputted from an AC power source 30. For example, the rectification unit 11 has a configuration formed of a pair of diode elements bridge-connected to each other. Elements for use in the rectification unit 11 are not limited to diodes, and rectification elements such as thyristors may be used.

The switching element 13 is connected between output terminals of the rectification unit 11 via the reactor 12 so as to be in parallel with the rectification unit 11. The switching element 13 is a semiconductor element such as an IGBT or an FET. On/off of the switching element 13 is controlled by the converter control unit 17 (described later).

The capacitor 14 is connected at the output side of the switching element 13 so as to be in parallel with the switching element 13. The capacitor 14 charges and discharges an electric charge according to the on/off of the switching element 13.

The reactor 12 is provided in a high voltage side electric power line between the rectification unit 11 and the switching element 13, for example. The set position of the reactor 12 is not limited thereto. For example, the reactor 12 may be provided in a low voltage side electric power line between the rectification unit 11 and the switching element 13. Alternatively, the reactors 12 (two reactors in total) may be provided in both the high voltage and low voltage sides. A high voltage side electric power line between the switching element 13 and the capacitor 14 is provided with a diode 15. In the example illustrated in Fig. 1, the diode 15 is provided in the high voltage side electric power line. However, the diode 15 may be provided in a low voltage side electric power line, or the diodes 15 may be provided in both the high voltage and low voltage side electric power lines. By the diode 15, a reverse flow of the electric charges charged in the capacitor 14 is prevented. Note that another rectification element may be used in place of the diode 15.

Further, the converter device 10 includes a voltage detection unit 16 that detects an input voltage inputted from the AC power source 30 to the rectification unit 11 and outputs the input voltage to the converter control unit 17.

The converter control unit 17 controls on/off of the switching element 13. The converter control unit 17 provides, in on/off control of the switching element 13, a switching suspension time period during which an on state of the switching element 13 is continuously maintained as described later.

For example, the converter control unit 17 is a microcomputer in which a CPU reads out a control program stored in a ROM, etc., into a RAM and executes the control program, whereby functions of the components (described later) are realized. Alternatively, the converter control unit 17 may be configured by an analog circuit, a digital circuit, or the like which realizes various functions.

A switching element driving circuit 18 generates a gate input signal for a switching element (e.g., an IGBT) on the basis of a PAM control signal Vpam supplied from the converter control unit 17, and thereby, drives the switching element 13.

The inverter device 20 converts a DC voltage outputted from the converter device 10 to a three-phase AC voltage and outputs the three-phase AC voltage to the motor 40. In the present embodiment, the motor 40 is a compressor motor for use in a household air conditioner.

For example, the inverter device 20 includes a three-phase bridge type inverter circuit 21 having six switching elements, and an inverter control unit 22 that controls the inverter circuit 21. The switching elements included in the inverter circuit 21 are driven on the basis of a PWM signal outputted from the inverter control unit 22, for example.

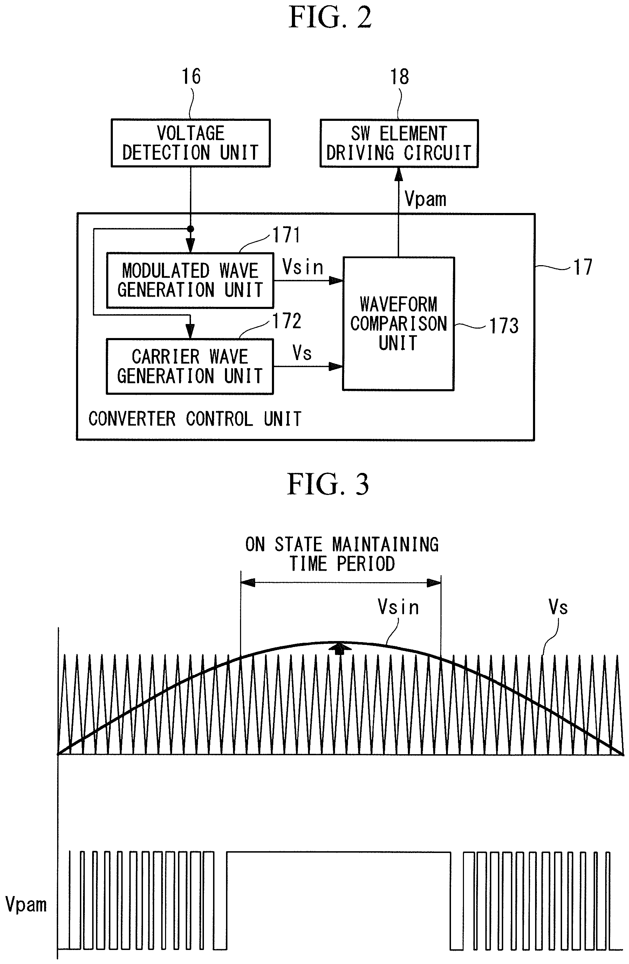

Fig. 2 is a diagram illustrating the schematic configuration of the converter control unit 17 according to the present embodiment. As illustrated in Fig. 2, the converter control unit 17 includes a modulated wave generation unit 171, a carrier wave (triangular wave) generation unit 172, and a waveform comparison unit 173.

The modulated wave generation unit 171 generates a modulated signal Vsin by using the input voltage detected by the voltage detection unit 16. Here, the input voltage detected by the voltage detection unit 16 is formed of a sine wave the frequency of which is 50 or 60 Hz, for example. The modulated wave generation unit 171 generates a modulated signal Vsin obtained by performing full-wave rectification on the sine wave of the input voltage and increasing the amplitude thereof at a prescribed amplitude modulation rate. Here, the prescribed amplitude modulation rate is set within a certain range that satisfies the regulation of harmonics, as described later. More specifically, the prescribed amplitude modulation rate may be set within a range of 110 to 120%.

The carrier wave generation unit 172 generates a triangular wave being synchronized with the input voltage and having a prescribed frequency which is set in advance. For example, the prescribed frequency is set within a frequency range of an audible region. More specifically, the prescribed frequency can be set, as appropriate. However, a high performance noise filter is needed when the prescribed frequency is set to be excessively high (e.g., a frequency higher than 10 kHz), and an increase of the weight (inductance) of the reactor needs to be involved when the prescribed frequency is set to be excessively low (e.g., a frequency lower than 1 kHz). Therefore, in light of this balance, the prescribed frequency may be set to 1 to 10 kHz, for example.

The waveform comparison unit 173 generates a PAM control signal Vpam by comparing the modulated signal Vsin generated by the modulated wave generation unit 171 with the carrier wave Vs generated by the carrier wave generation unit 172. Specifically, the waveform comparison unit 173 generates the PAM control signal Vpam which is a rectangular wave signal configured to become a High level when the level of the modulated signal Vsin is equal to or higher than the level of the carrier wave Vs, and to become a Low level when the level of the modulated signal Vsin is not higher than the level of the carrier wave Vs.

The waveform comparison unit 173 outputs the generated PAM control signal Vpam to the switching element driving circuit 18.

The switching element driving circuit 18 performs on/off control of the switching element 13 on the basis of the PAM control signal Vpam which is a rectangular wave signal generated by the waveform comparison unit 173. As a result, the switching element 13 is controlled such that the switching element 13 is in an on state when the PAM control signal Vpam is at the High level and the switching element 13 is in an off state when the PAM control signal Vpam is at the Low level.

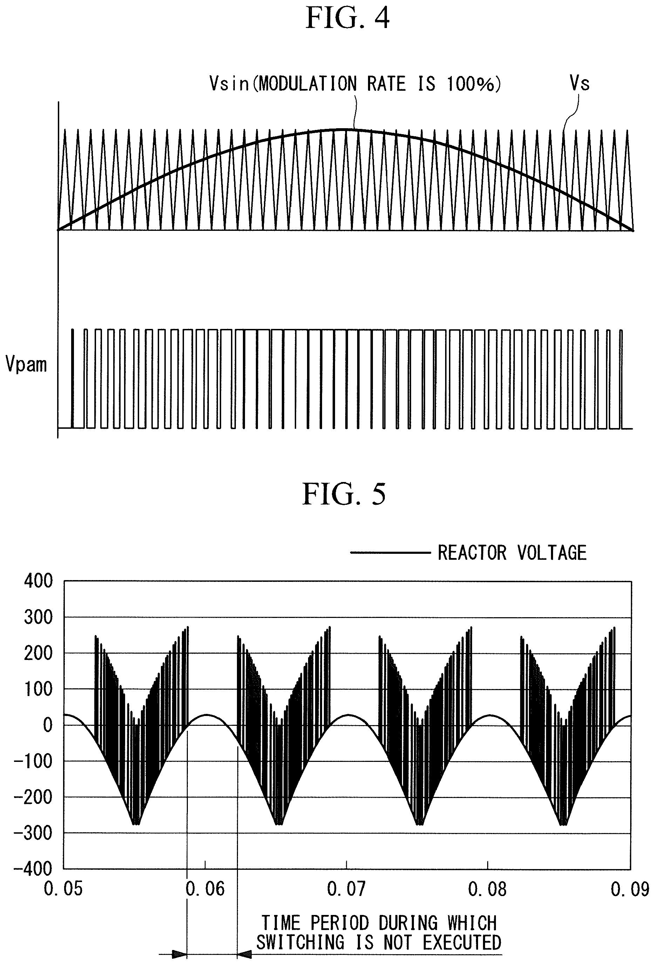

Fig. 3 shows one example of waveforms of the modulated signal Vsin, the carrier wave Vs, and the PAM control signal Vpam according to the present embodiment. Fig. 4 shows one example of waveforms of the modulated signal Vsin, the carrier wave Vs, and the PAM control signal Vpam when the modulation rate at the modulated wave generation unit 171 is set to 100%, namely, when modulation is not executed.

As shown in Fig. 3, the amplitude of the modulated signal Vsin according to the present embodiment is increased by the modulated wave generation unit 171 at the prescribed modulation rate. Accordingly, when the case shown in Fig. 3 is compared with a case shown in Fig. 4 in which modulation is not executed, a time period during which the modulated signal Vsin is equal to or higher than the carrier wave Vs continuously occurs in the case shown in Fig. 3. During this time period, the PAM control signal Vpam is maintained at the High level. Therefore, the converter device 10 according to the present embodiment can provide a time period during which an on state of the switching element 13 is continuously maintained, namely, a time period during which switching is not executed. In this way, the continuous on time period of the switching element 13 is provided so that the number of times of switching can be reduced and occurrence of a time period during which a current flowing through the reactor 12 includes no high frequency component is enabled. As a result, loss (iron loss, copper loss) in the reactor can be reduced. By provision of the switching suspension time period, noise can be reduced.

Next, operations of the motor driving apparatus according to the present embodiment are described.

First, the AC voltage outputted from the AC power source 30 is subjected to full-wave rectification by the rectification unit 11, and is supplied, via the reactor 12, to the switching element 13, or to a part between a collector and an emitter of an IGBT, for example. Here, the output voltage from the rectification unit 11 is supplied to the switching element 13, with a phase delay by the reactor 12.

On the other hand, an input voltage inputted from the AC power source 30 to the rectification unit 11 is detected by the voltage detection unit 16, and is outputted to the modulated wave generation unit 171 and the carrier wave generation unit 172 of the converter control unit 17. The modulated wave generation unit 171 performs full-wave rectification on the inputted voltage waveform and generates the modulated signal Vsin the amplitude of which has been modulated at the prescribed modulation rate. As a result, the modulated signal Vsin the frequency of which is, for example, twice higher (e.g., 120 Hz when the input voltage is 60 Hz) than the frequency of the input voltage and the amplitude of which has been increased at the prescribed modulation rate is generated. Here, in view of a phase delay by the reactor 12, the modulated signal Vsin may be generated so as to have a prescribed phase delay relative to the input voltage.

On the other hand, the carrier wave generation unit 172 generates a carrier wave being synchronized with the input voltage and having the prescribed frequency which is set in advance. Also, regarding the carrier wave, in view of the phase delay by the reactor 12, the carrier wave Vs may be caused to have a prescribed phase delay relative to the input voltage. The value of the prescribed phase delay for the modulated signal Vsin and the value of the prescribed phase delay for the carrier wave Vs are equal to each other.

The waveform comparison unit 173 generates the PAM control signal Vpam which is a rectangular wave signal by comparing the modulated signal Vsin from the modulated wave generation unit 171 with the carrier wave Vs from the carrier wave generation unit 172.

The PAM control signal Vpam which is a rectangular wave signal generated by the waveform comparison unit 173 is supplied to the switching element driving circuit 18. The switching element driving circuit 18 performs on/off control of the switching element 13 at a duty ratio based on the PAM control signal Vpam. Here, the magnitude of an output voltage to be supplied to the inverter device 20 is determined according to the duty ratio for turning on/off the switching element 13.

Accordingly, when the switching element 13 is turned on, a current flowing through the reactor 12 is increased and energy is accumulated in the reactor 12. When the switching element 13 is turned off, the energy accumulated in the reactor 12 is released so that a capacitor serving as the capacitor 14 is charged with the energy via the diode 15. The voltage charged in the capacitor 14 is supplied, as an output voltage, to the inverter circuit 21 of the inverter device 20.

In the inverter device 20, the switching elements of the inverter circuit 21 are turned on/off at the prescribed duty ratio by the inverter control unit 22 so that a three-phase AC voltage is generated. The three-phase AC voltage is supplied to the motor 40, whereby rotation of the motor 40 is controlled.

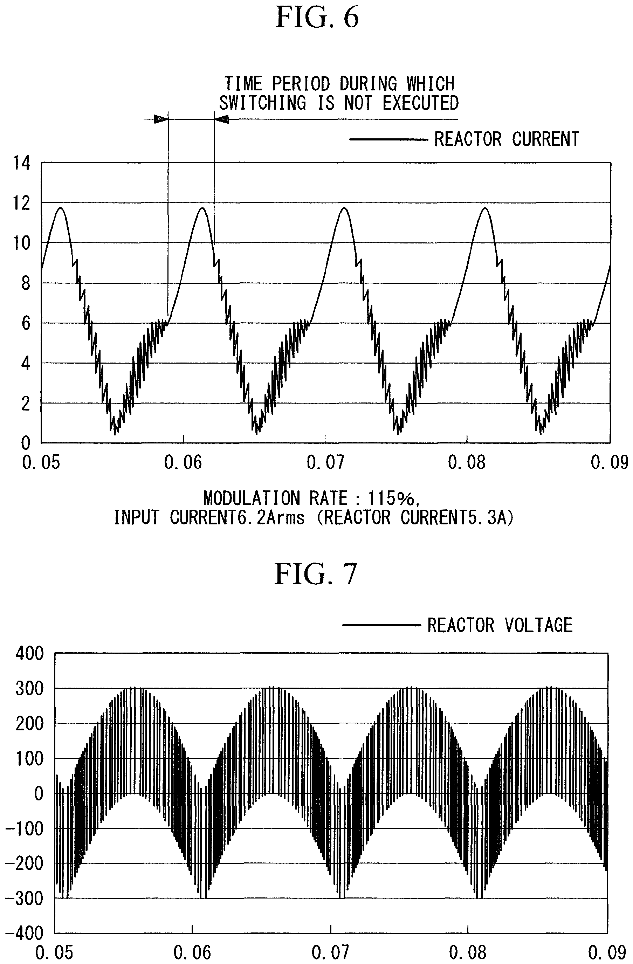

Figs. 5 and 6 are diagrams showing the result of an experiment in which the modulation rate at the modulated wave generation unit 171 of the converter device 10 according to the above present embodiment was set to 115%. Fig. 5 shows the voltage waveform of a reactor voltage. Fig. 6 shows the current waveform of a reactor current.

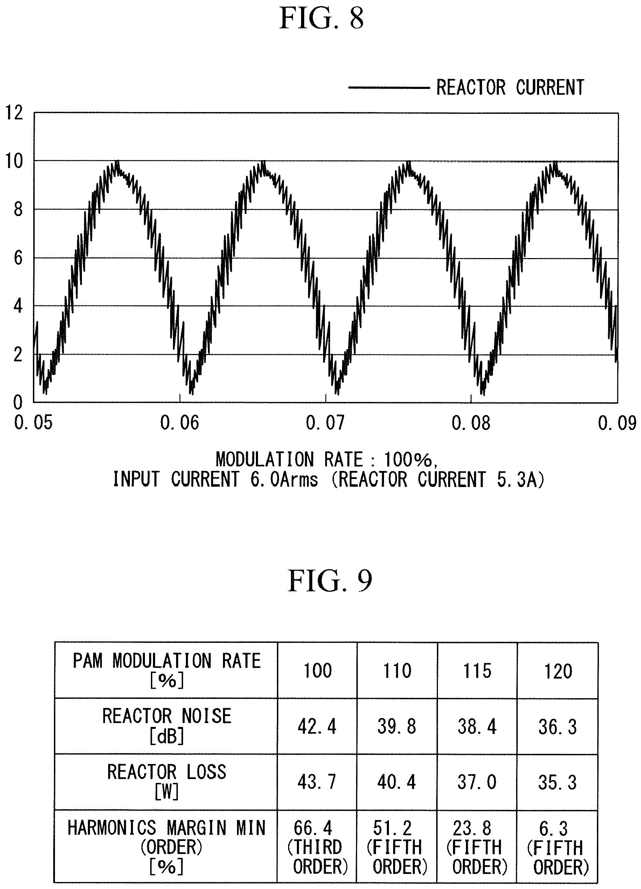

Figs. 7 and 8 are diagrams showing the result of an experiment in which the amplitude modulation rate at the modulated wave generation unit 171 was set to 100% in a configuration similar to the configuration of the converter device 10 according to the present embodiment. Fig. 7 shows the voltage waveform of a reactor voltage. Fig. 8 shows the current waveform of a reactor current.

Figs. 5 to 8 show the results of the experiments in which the input current was 6.0 Arms, the carrier frequency was 8 kHz, and the inductance of the reactor was 10 mH.

As shown in Figs. 5 and 7, in the converter device 10 according to the present embodiment, no harmonics occur in the reactor voltage in a time period during which the switching element 13 is continuously in the on state, namely, a time period during which the on/off control of the switching element 13 is continuously suspended. As a result, as shown in Figs. 6 and 8, harmonics included in the reactor current can be reduced, and the noise and loss can be reduced.

Fig. 9 shows the results of experiments in which the modulation rate at the modulated wave generation unit 171 of the converter device 10 according to the above present embodiment was set to 100%, 110%, 115%, and 120%. In Fig. 9, the reactor noise, the reactor loss, and the minimum values of the harmonic margin with respect to the regulation of harmonics determined by the IEC obtained at the respective modulation rates are shown so as to be compared with one another. When the results of experiments shown in Fig. 9 were obtained, the experiment conditions were set as follows:
Input current: 8 Arms
Input voltage: 220 V
Frequency of input voltage: 50 Hz
Carrier frequency: 4 kHz
Inductance of reactor: 10 mH

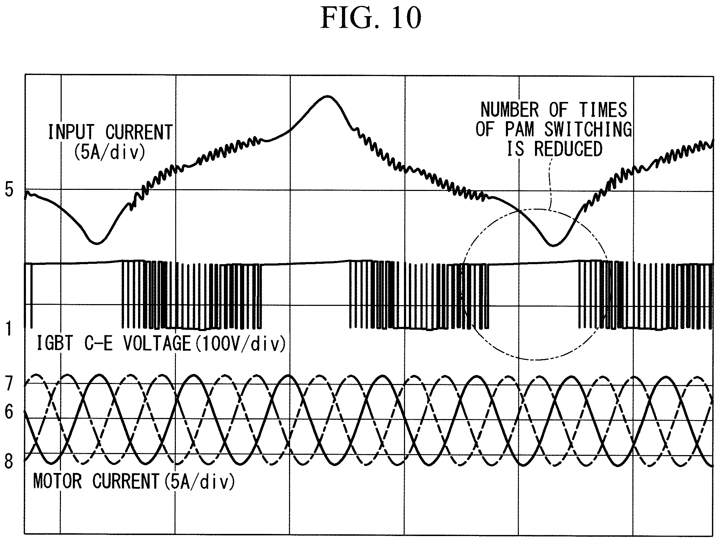

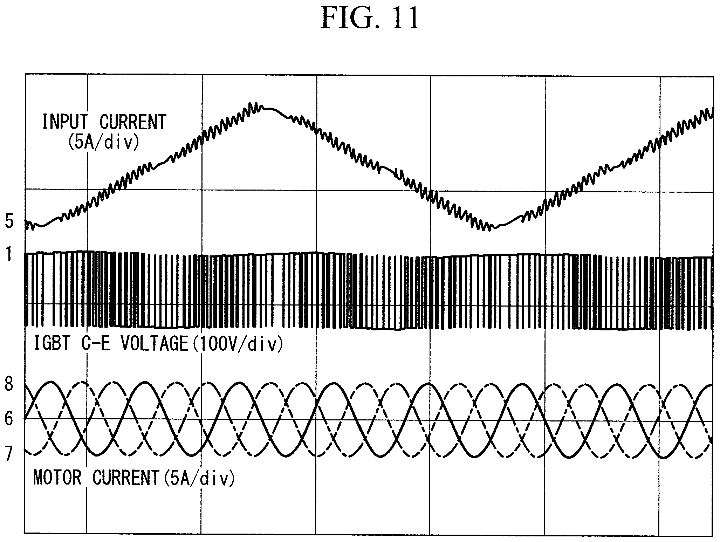

Fig. 10 is a diagram showing the waveform of an input current, the waveform of a driving signal for the switching element 13, or more specifically, the voltage between a collector and an emitter of an IGBT serving as the switching element 13, and the waveform of the motor current when the modulation rate was set to 120% in the above experiment. Fig. 11 is a diagram showing the waveform of an input current, the waveform of a driving signal for the switching element, and the waveform of the motor current when the modulation rate was set to 100% in the above experiment.

Figs. 9 to 11 show that when the PAM modulation rate was higher, the reactor noise and the reactor loss were reduced more. On the other hand, with an increase of the PAM modulation rate, the ratio of low-order (the third order, the fifth order) harmonics in the input current becomes larger so that the harmonic margin with respect to the regulation of harmonics becomes smaller. Therefore, the upper limit value of the PAM modulation rate is set to the maximum value of a certain range that can satisfy the regulation of harmonics. The results in Figs. 9 to 11 show that, at least in cases where the PAM modulation rate was within the range of 110 to 120%, the obtained results were preferable from all the viewpoints including the reactor noise, the reactor loss, and the harmonic margin.

As described above, in the converter device, the control method for the same, and the motor driving apparatus according to the present embodiment, the modulated wave generation unit 171 increases the amplitude of the input voltage at the prescribed modulation rate so that the continuous on time of the switching element 13 can be provided and occurrence of a harmonic component can be avoided during the continuous on time, as shown in Fig. 3. Accordingly, noise and loss in the reactor can be reduced while upsizing of the reactor is avoided.

Moreover, the prescribed modulation rate is set to an appropriate value so that the regulation of harmonics can be satisfied.

Furthermore, in the converter device and the motor driving apparatus according to the present embodiment, the carrier wave is limited to frequencies equal to or lower than the audible region so that occurrence of harmonics can be further inhibited, when compared with a case where the carrier wave is set to a frequency band higher than the audible region. Accordingly, the predetermined regulation of harmonics can be satisfied without necessity of an expensive filter or the like.

### [Reference Signs List]

- 10: converter device
- 11: rectification unit
- 12: reactor
- 13: switching element
- 14: capacitor
- 15: diode
- 16: voltage detection unit
- 17: converter control unit
- 18: switching element driving circuit
- 20: inverter device
- 21: inverter circuit
- 22: inverter control unit
- 171: modulated wave generation unit
- 172: carrier wave generation unit
- 173: waveform comparison unit
- Vsin: modulated signal
- Vs: carrier wave
- Vpam: PAM control signal

## Claims

1. A converter device comprising:
a rectification unit that performs full-wave rectification on an input voltage from an AC power source;
a switching element connected between output terminals of the rectification unit;
a capacitor connected in parallel with the switching element;
a reactor provided in an electric power line between the rectification unit and the switching element; and
a converter control unit that controls on/off of the switching element, wherein
the converter control unit provides, in on/off control of the switching element, a switching suspension time period during which an on state of the switching element is continuously maintained.

2. The converter device according to claim 1, comprising
a voltage detection unit that detects an input voltage inputted to the rectification unit, wherein
the converter control unit includes
a modulated signal generation unit that generates a modulated signal by increasing, at a prescribed modulation rate, an amplitude of the input voltage detected by the voltage detection unit,
a carrier wave generation unit that generates a carrier wave having a prescribed frequency by using the input voltage detected by the voltage detection unit, and
a waveform comparison unit that generates a control signal for the switching element by comparing the modulated signal generated by the modulated signal generation unit with the carrier wave generated by the carrier wave generation unit.

3. The converter device according to claim 2, wherein
the modulation rate is set within a certain range that allows harmonics included in a reactor current flowing through the reactor to satisfy a prescribed regulation of harmonics.

4. The converter device according to claim 3, wherein
the modulation rate is set within a range of 110 to 120%.

5. The converter device according to any one of claims 2 to 4, wherein
a frequency of the carrier wave is set within an audible region.

6. A motor driving apparatus comprising:
the converter device according to any one of claims 1 to 5; and
an inverter device that converts a DC voltage outputted from the converter device to an AC voltage.

7. A control method for a converter device including a rectification unit that performs full-wave rectification on an output from an AC power source, a switching element connected in parallel between output terminals of the rectification unit, a capacitor connected in parallel with the switching element, and a reactor provided in an electric power line between the rectification unit and the switching element, the method comprising
providing, in on/off control of the switching element, a switching suspension time period during which an on state of the switching element is continuously maintained.
